# EUROPEAN PATENT SPECIFICATION

(11) **EP 3 792 540 B1**
(45) Date of publication and mention of the grant of the patent: **18.12.2024**
(21) Application number: 20158449.7
(22) Date of filing: 20.02.2020
(51) Int. Cl.: F16L 5/04, A62C 2/06, A62C 2/14, A62C 2/24, A62C 35/68, F24F 11/35, F24F 13/14

(54) **A CEILING UNIT FOR PIPEWORK**
EINE DECKENEINHEIT FÜR ROHRARBEITEN
UNE UNITÉ DE PLAFOND POUR LA TUYAUTERIE

(30) Priority: 13.09.2019 GB 201913260
(43) Date of publication of application: 17.03.2021
(73) Proprietor: Intumescent Systems Limited, Barfrestone Dover Kent CT15 7JG (GB)
(72) Inventor: Ward, Derek, Dover, Kent CT15 7JG (GB)
(74) Representative: Fry, David John

(56) References cited:
- WO-A1-2006/034534
- DE-A1- 102008 026 269
- DE-A1- 19 938 498
- DE-U1- 29 704 346
- FR-A1- 2 286 351
- GB-A- 2 318 975

## Description

### FIELD OF THE INVENTION

The present invention relates a ceiling unit for pipework. More especially the invention relates to a ceiling unit that rapidly seals the ceiling aperture in the event of a fire.

### BACKGROUND TO THE INVENTION

It is common for industrial buildings to have vents in the ceiling through which pipework extends. In many cases the pipework consists of thin walled piping made from polypropylene or PVC, having a typical wall thickness of 2.5mm to 4mm, which penetrates through a plasterboard or block concrete ceiling.

In the event of a fire, the pipework will rapidly melt, often within 10 to 20 seconds leaving an exposed aperture in the ceiling through which the fire can spread, and through the ceiling structure and into other areas of the building.

The present invention seeks to provide a solution to the problem by providing a ceiling unit that surrounds the pipework at the point it exits through the ceiling and which has a rapid closing mechanism to seal off the ceiling aperture in the event that pipework is destroyed or the structural integrity of the pipework is lost in the event of a fire.

Document GB 2 318 975 A discloses a fire-resistant duct for one or more cables and/or pipes comprising a frame and, within the frame, at least one blade for movably closing the duct, wherein: the blade comprises (i) a portion of intumescent material and (ii) flexible smoke retardant means to engage the cable or cables or pipe or pipes to thereby form with the blade a continuous barrier across the frame. Preferably the blade is arranged to be biased towards a closed position by a bimetallic strip, gravity or spring means.

### STATEMENT OF THE INVENTION

According to a first embodiment of the invention, which is defined in the independent claim, there is provided a protective unit for pipework extending through an aperture in a wall or ceiling, the unit comprising a tubular box structure having one or more side walls, and having means to secure an open end of the structure to the wall or ceiling at the aperture, the unit having a base at least part of which is pivotal about distal edge of a side wall remote from the wall or ceiling, and breakable means to hold the base part adjacent an inside surface of the side wall, wherein the base part pivots to an orientation perpendicular to the side wall of the unit in the event that the holding means is broken, to close and seal that end of the unit.

### BRIEF DESCRIPTION OF THE DRAWINGS

An embodiment of the invention will now be described with reference to the accompanying figures, in which:
Figure 1 is a perspective from one end of a unit constructed in accordance with a first embodiment of the invention;
Figure 2 is an end view of the unit of figure 1;
Figure 3 is a view of the unit from the other end;
Figure 4 is an exploded internal view of the unit from the end of figure 2;
Figure 5 is a view of the unit of figures 1 to 4 in use; and
Figure 6 is an end of view of the unit after a fire.

### DETAILED DESCRIPTION OF THE INVENTION

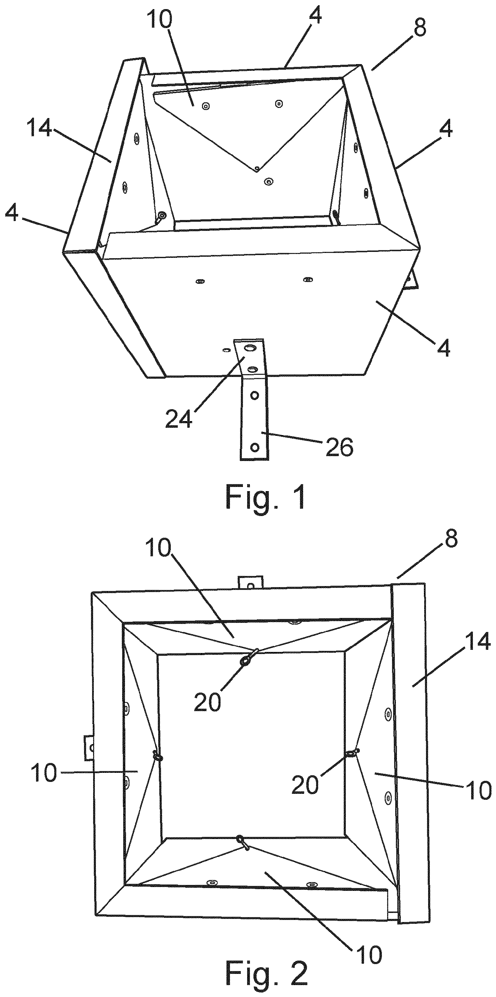

A sealing unit of the invention is shown in figure 1. The unit comprises a box-structure 2 made from 18 gauge metal Zintex^{™}.

Whilst this material has been found by the applicant to provide the best results in fire tests, the unit could be made from any other suitable metal structure.

The unit 2 has a generally square or rectangular form having four joined side wall sections 4. The unit 2 could be formed of a single continuous side wall.

One end 6 of the unit 2 is entirely open. The other end 8 has a base made up from four triangular sections 10. Each triangular section 10 has a base edge 12 that is pivotally secured to or near the bottom edge of the respective side wall section 4.

The length of the base edge 12 of each triangular section 10 is less than the length of the edge of the wall section 4.

The edge of each side wall section 4 at its end 8 is formed with an inwardly extending perpendicular lip or flange 14.

The pivot connection (not shown) includes a spring mechanism which acts to bias the triangular sections 10 to orientation that extends perpendicular to the unit walls 4 to form a closed wall extending across the end 8 of the unit 10. The end is entirely closed off by the triangular sections 10 and flange 14 which overlies the corners of triangular sections 10.

As can be seen in figure 1, each triangular section 10 is held in place adjacent the inside surface of its respective wall section 4 against its pivotal bias.

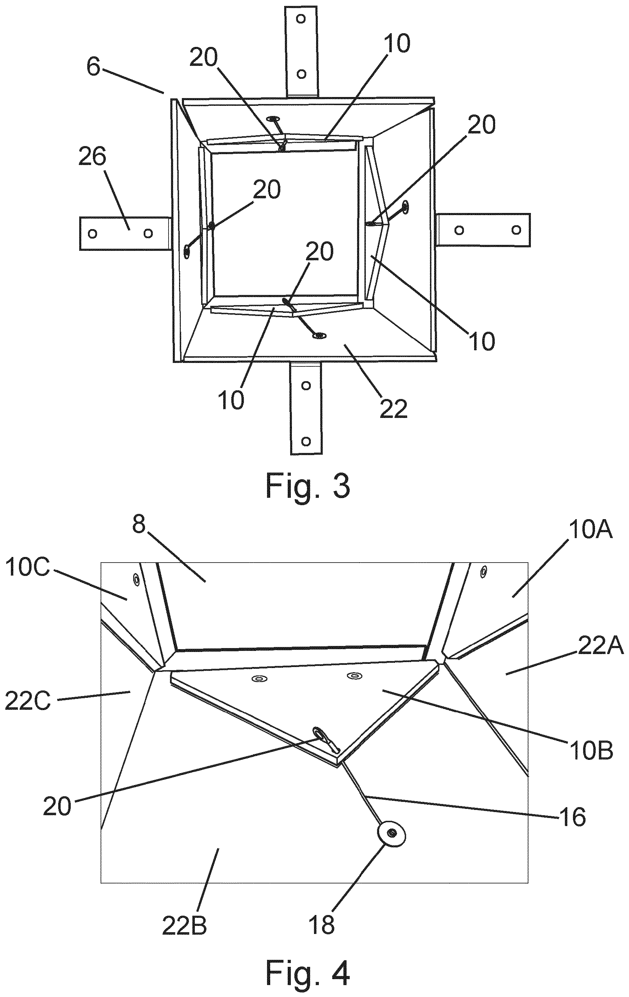

As seen best in figure 4, each triangular section 10 is held in such an orientation by a thin wire 16 that extends through an aperture at the tip of the triangular section 10. The other end of each wire 16 is secured to the inside surface of its respective wall section 4 by a pop rivet and washer 18.

The distal end of each wire 16 is secured to an eyelet or stopper 20 larger than the aperture in the triangular section 10 to prevent the wire 16 from being pulled back through the aperture under the pivotal bias.

Consequently, in its normal state, for use, the unit 2 is open at both ends 6, 8 to allow pipework to extend through the unit 2.

The wires 16 holding the triangular base sections 10 are constructed of a material designed to melt, and therefore break, at around 70°C. Preferably the wires 16 are made a material such a nylon or other polymer commonly used for fishing wire. At this time, the pipework will have already melted and the pivotal bias causes the triangular sections 10 to instantly pivot away from the inside surfaces of each wall section 4, to align perpendicularly so to form a closed wall over the end 8 of the unit 2, overlying the ceiling aperture.

To provide fire protection in such circumstances, the inside faces of the unit 2 have a layer of expandable intumescent material 22. The layer is preferably a fire resistance foam impregnated with intumescent material. The inside surfaces of each triangular section 10 also carry a layer of intumescent foam 22.

Whilst the embodiment described shows a unit of square cross section and triangular base sections, other shaped profiles could be equally applicable. The unit could for example be circular in cross section, in which case the base sections would have a complimentary half- moon shape.

As can be seen in figure 4, at or near the open end 6 of the unit, outer surfaces of each wall section 4 has secured thereto one arm 24 of an L-shaped bracket.

As can be seen in figure 3, the other arm 26 of each bracket is secured to the ceiling or wall 28 using screws, raw bolts or toggle bolts.

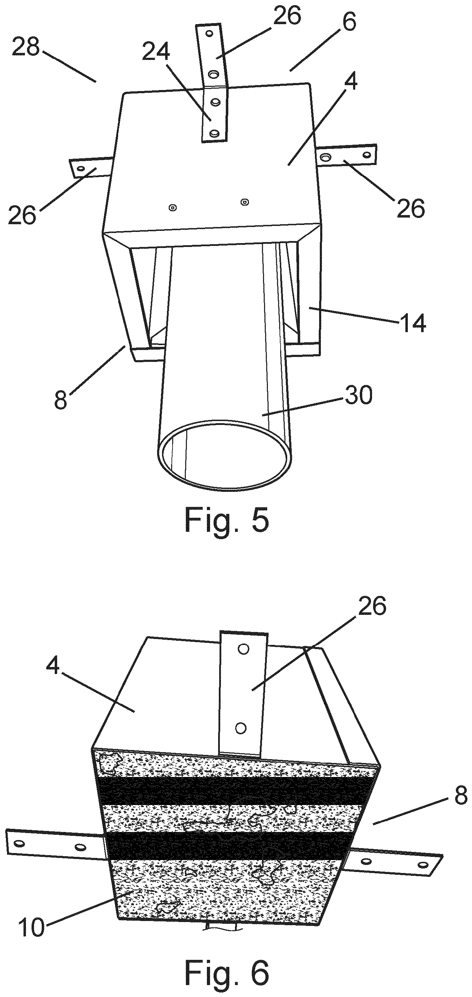

Referring now to figure 5, the unit 2 is secured in this way to over the aperture in the ceiling 28 through which the pipework 28 can extend. As both ends 6, 8 of the unit 2 are open, the pipework 28 continues to extend completely through the unit 2.

In the event of a fire, the pipework 28 will quickly melt and almost instantaneously, the base of the unit 2 closes and the intumescent foam layer 22 within the unit expands to fill the unit 2 to completely seal off the ceiling aperture.

Figure 6 shows the unit 2 after a fire. It can be seen that the end 8 of the unit 2 is entirely sealed by the fused triangular based sections 10 charred with an intumescent layer.

Tests have found the unit 2 to provide up to two hour fire protection on plasterboard ceilings and up to four hours fire protection on concrete or block ceilings.

Reference to "ceiling" is intended to include any wall structure. The unit 2 would be equally applicable to seal vertical wall or floor apertures through which pipework may extend.

## Claims

1. A protective unit for pipework extending through an aperture in a ceiling, the unit comprising a tubular box structure (2) having one or more side walls (4), and having means to secure an open end (6) of the structure to the ceiling at the aperture, the unit having a base (10) at least a section of which is pivotal about a distal edge of a side wall remote from the ceiling in use, and breakable means (16) to hold the base or section thereof adjacent an inside surface of the side wall, wherein the base or section thereof pivots to an orientation perpendicular to the side wall of the unit in the event that the holding means is broken, to close and seal that end of the unit, wherein the inside surfaces of the one or more side walls and the base have a layer of expandable intumescent material (22) **characterised in that** the breakable base holding means (16) comprises a wire, one end of which is connected to the base (10) or the section thereof, and the other end of the wire is connected to the inside surface of the side wall or side wall section of the unit

2. A unit according to claim 1, wherein the box structure has a square or rectangular cross section and the base comprises four triangular sections.

3. A unit according to claim 2, wherein all four sections are pivotal about the side wall edge.

4. A unit according to any one of claims 1 to 3 wherein the wire is made from nylon and is meltable at or around 70°C.

## Patentansprüche

1. Schutzeinheit für Rohrarbeiten, die sich durch eine Öffnung in einer Decke erstrecken, wobei die Einheit eine röhrenförmige Kastenstruktur (2) mit einer oder mehreren Seitenwänden (4) umfasst und Mittel zum Befestigen eines offenen Endes (6) der Struktur an der Decke an der Öffnung aufweist, wobei die Einheit eine Basis (10) aufweist, von der zumindest ein Abschnitt um eine distale Kante einer Seitenwand entfernt von der Decke in Verwendung schwenkbar ist, und zerbrechliche Mittel (16), um die Basis oder einen Abschnitt davon benachbart zu einer Innenfläche der Seitenwand zu halten, wobei die Basis oder der Abschnitt davon in eine Ausrichtung senkrecht zu der Seitenwand der Einheit schwenkt, falls das Haltemittel zerbrochen wird, um dieses Ende der Einheit zu schließen und abzudichten, wobei
die Innenflächen der einen oder mehreren Seitenwände und die Basis eine Schicht aus expandierbarem intumeszierenden Material (22) aufweisen, **dadurch gekennzeichnet, dass** das zerbrechliche Basishaltemittel (16) einen Draht umfasst, von dem ein Ende mit der Basis (10) oder dem Abschnitt davon verbunden ist, und das andere Ende des Drahtes mit der Innenfläche der Seitenwand oder dem Seitenwandabschnitt der Einheit verbunden ist.

2. Einheit nach Anspruch 1, wobei die Kastenstruktur einen quadratischen oder rechteckigen Querschnitt aufweist und die Basis vier dreieckige Abschnitte umfasst.

3. Einheit nach Anspruch 2, wobei alle vier Abschnitte um die Seitenwandkante schwenkbar sind.

4. Einheit nach einem der Ansprüche 1 bis 3, wobei der Draht aus Nylon besteht und bei oder bei etwa 70 °C schmelzbar ist.

## Revendications

1. Unité de protection pour tuyauterie s'étendant à travers une ouverture dans un plafond, l'unité comprenant une structure de caisson tubulaire (2) comportant une ou plusieurs parois latérales (4), et comportant un moyen pour fixer une extrémité ouverte (6) de la structure au plafond au niveau de l'ouverture, l'unité comportant une base (10) dont au moins une section pivote autour d'un
bord distal d'une paroi latérale éloignée du plafond lors de l'utilisation, et un moyen cassable (16) pour maintenir la base ou la section de celle-ci adjacente à une surface intérieure de la paroi latérale, ladite base ou ladite section de celle-ci pivotant vers une orientation perpendiculaire à la paroi latérale de l'unité dans le cas où le moyen de maintien est rompu, pour fermer et sceller cette extrémité de l'unité,
lesdites surfaces intérieures de la ou des parois latérales et de la base comportant une couche de matériau intumescent extensible (22), **caractérisé en ce que** le moyen de maintien (16) de la base cassable comprend un fil métallique dont une extrémité est reliée à la base (10) ou la section de celui-ci, et l'autre extrémité du fil métallique est reliée à la surface intérieure de la paroi latérale ou de la section de paroi latérale de l'unité.

2. Unité selon la revendication 1, ladite structure en caisson comportant une section transversale carrée ou rectangulaire et ladite base comprenant quatre sections triangulaires.

3. Unité selon la revendication 2, lesdites quatre sections pivotant autour du bord de la paroi latérale.

4. Unité selon l'une quelconque des revendications 1 à 3, ledit fil métallique étant fabriqué à partir de nylon et pouvant fondre à une température de 70°C ou à une température autour de celle-ci.
